# EUROPEAN PATENT SPECIFICATION

(11) **EP 2 122 425 B1**
(45) Date of publication and mention of the grant of the patent: **15.10.2014**
(21) Application number: 08709313.4
(22) Date of filing: 06.02.2008
(51) Int. Cl.: G05B 19/41

(54) **Method and arrangement for transmitting alarm data from the server to the client via MODBUS communication**
Verfahren und Anordnung zur Übertragung von Alarmdaten von einem Server auf einen Client durch MODBUS-Kommunikation
Procédé et agencement de transmission de données d'alerte du serveur au client via une communication MODBUS

(30) Priority: 21.02.2007 FI 20075128
(43) Date of publication of application: 25.11.2009
(73) Proprietor: Wärtsilä Finland Oy, 65380 Vaasa (FI)
(72) Inventor: STRANDBERG, Leif, FI-66100 Malax (FI); JUPPO, Pasi, FI-65200 Vaasa (FI)
(74) Representative: Berggren Oy Ab
(86) International application number: PCT/FI2008/050045
(87) International publication number: WO 2008/102053

(56) References cited:
- US-A- 5 862 391
- US-A1- 2002 161 558
- MODBUS IDA: "Modbus Application Protocol Specification V1.1 b" INTERNET ARTICLE, [Online] 28 December 2006 (2006-12-28), pages 1-51, XP002483120 Internet Retrieved from the Internet: URL:http://www.modbus.org/docs/Modbus_Appl ication_Protocol_V1_1b.pdf> [retrieved on 2008-06-03]

## Description

### Field of invention

The present invention relates to transmitting alarm data in a client/server environment, in which Modbus communication is used for transmitting alarm data from the server to the client. The word client refers to an apparatus connected to the data communication network, requesting data from another apparatus connected to the data communication network. The word server refers to an apparatus connected to the data communication network, sending data to another apparatus connected to the data communication network. Server and client functions can be combined in the same apparatus.

### Background art

Modbus, as described in "modbus application protocol specification V1.1b", is a data communication protocol commonly used in industry. It is based on requests and replies. The client sends a request to the server and the server sends a reply to the request. An HMI apparatus is a typical client and a PLC controller is a typical server. The protocol is an application level data communication protocol, i.e. it is on level 7 in the OSI model. Use of Modbus has branched out from traditional industrial applications to other areas, such as to vessels for monitoring the operations of diesel engines.

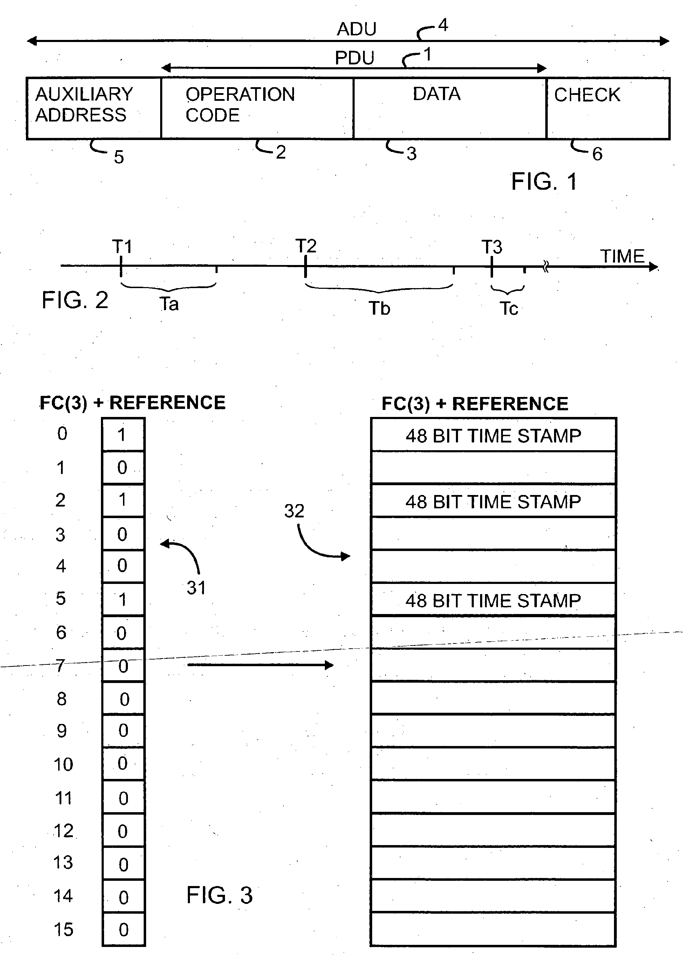

In Modbus, the data are transmitted in PDU units 1 (Protocol Data Unit) comprising an operation code field 2 and a data field 3. The operation code field specifies the desired operation and the data field contains additional information used by the server for executing the operation specified by the operation code field. When the server has executed the desired operation, the data field of the PDU reply sent by the server contains the information requested by the client. Because in practice Modbus communication are arranged to be transmitted in a certain network, such as TCP/IP network or Ethernet, a network type-specific ADU unit 4 (Application Data Unit) is needed for transmitting the data. Figure 1 illustrates how the PDU unit 1 is located inside the ADU unit 4. An additional address field 5 containing the server address is arranged in the beginning of the ADU unit. A check field 6 for checking the error free transmission of the ADU unit.

The Modbus architecture has interfaces for applications on the client and server side. The vendors of applications/apparatuses make a product-specific mapping between the Modbus interface and the application. Thus the protocol provides a certain interface model for vendors to provide a compatible product therewith.

The server interface comprises a Modbus data model. The data model consists of four primary tables, each containing 65536 data entries. The data field of the PDU contains a reference marking to data entries pre-mapped by the apparatus manufacturer.

Application environments monitoring the status of a number of apparatuses usually utilize a centralized monitoring unit. In a vessel environment, for example, the apparatuses to be monitored are various components of the motor and the monitoring unit is an HMI unit on the bridge of the vessel. As the status of a motor part exceeds certain limits, the HMI apparatus must trigger an alarm to the personnel on the bridge. The data caused by the alarm, i.e. alarm data, must be sent to the monitoring unit by the motor. The alarm data contains data information the status of the component as well as a time stamp. Often a number of alarms and other events happen at the same time. If a time stamp is not available, the HMI apparatus marks the reception time of the alarm as the time stamp. Because the HMI apparatus polls (sends a request for events to the servers) at certain intervals, a large number of alarms and events can have happened between polls. Thus, arranging the events and alarms on the basis reception time stamp is impossible. Because of this it is very time-consuming to find out the original cause of the alarm, for example the stopping of the engine.

The Modbus protocol does not specify how the alarm data signal is transmitted from the server to the client, e.g. from the motor to the HMI apparatus. There are manufacturer-specific methods for transmitting alarm data signal, the methods, however, requiring relatively complex realizations in both the client and server ends in order to be operative. One method is to transfer the sequencer time of the server. The sequencer time is time Ta, Tb, Tc... until a certain synchronized point in time. See figure 2. The server utilizes a certain reoccurring synchronized point of time T1, T2, T3... from which the sequencer commences calculating the time. The sequencer time Ta, Tb, Tc... is transferred as 16 bit data in the data field 3 of the Modbus PDU unit. The client must reconstruct the received time into a usable synchronized time. Reconstruction is relatively difficult in this method.

### Brief description of the invention

The aim of the invention is to form a simple and easily realizable method of transferring the alarm data from the server to the client. The aim is achieved using means described in the main claim. In a solution according to the invention the alarm data is sent from the server to the client in two steps. In the first step the system sends the information about the occurrence of at least one alarm event. In the second step the alarm event specific time stamps are sent. Preferably the time stamp information is already in such a form that in can be used as such and it can be relatively easily coded into a more usable form. Only a normal decoding, executed in any case, of the signal structure is done.

The method of transferring the alarm data from the server to the client via Modbus data communication comprises the following steps:
- sending from the client to the server a request according to operation code 3 containing a certain reference marking,
- receiving the request at the server and executing the operation of the request and sending to the client a reply containing operation code 3 and the data specified in the reference marking,
- receiving the reply at the client and checking whether the information of the reply are changed in relation to the data received earlier,
- In case the data have changed, sending from the client to the server a second request containing a certain second operation code having the same reference marking,
- receiving the second request at the server and executing the operation of the second request and sending to the client a second reply containing a second operation code and the data specified in the reference marking, and
- receiving the second reply at the client.

The client apparatus of the arrangement according to the invention is arranged to use Modbus data communication for requesting the data from the server apparatus. The client apparatus comprises communication means for forming requests and for receiving replies according to the Modbus protocol. The communication means are arranged to form a request according to operation code 3 having a certain reference marking for commencing receiving alarm data from the server apparatus. The client apparatus also comprises checking means for checking whether the received data of operation code 3 and the reference marking have changed in relation to the data received earlier.

The communication means are also arranged for sending from the client to the server a second request according to a second operation code having the same reference marking in case the data are found to have changed on the basis of the check performed by the checking means.

The server apparatus according to the invention is arranged to use Modbus data communication for sending data to the client apparatus, the server apparatus comprising first means for receiving requests and sending replies according to the Modbus protocol and second means for performing the operations of the requests. The second means comprise primary tables comprising Modbus registers. A certain register of a certain primary table is arranged to represent a 16 bit line indicating alarm events, to which register the operation code 3 and a certain reference marking point to. The second register part of the primary table is arranged to represent 16*48 bit data, from which each 48 bits represent a time stamp of a certain alarm event. The certain second operation code and the same reference marking point to the second register part.

### List of figures

In the following the invention is described in more detail by reference to the appended figures, in which
Figure 1 illustrates an example of the structure of the Modbus message,
Figure 2 illustrates an example of a prior art method of forming a time stamp,
Figure 3 illustrates an example of the contents of messages according to the invention,
Figure 4 is a flow diagram of the method according to the invention, and
Figure 5 illustrates an example of the arrangements according to the invention.

### Description of the invention

Figure 3 illustrates a 16-bit data register 31 in which each bit can describe a certain alarm event. Usually, the numbering of bits starts from zero, so the ordinal number of the last bit is 15. Bit 0 can, for example, describe the temperature of the main bearing SF, bit 2 can describe alarm-triggering exceeding of the temperature of the main bearing ALM and bit 5 can describe exceeding the critical temperature of the main bearing SHD, causing shut down of the engine. All bits are not necessarily specified to describe the statuses of the motor. When the temperature of the main bearing increases too much, the value of the corresponding bit changes from zero to one.

The data register is in the memory of the server. The client apparatus receives the data of the data register by sending to the Modbus a request according to operation code 3 containing a reference number, i.e. a reference marking pointing to the register.

Operation code 3 is used for reading the registers. The request comprises indication of the operation code, the reference number of the first register to be read and the amount of registers to be read. The request contains 5 bytes, whereby the contents of the PDU can be, for example, as follows:
Byte 0: Operation code = 03 (hexadecimal system is usually used)
Bytes 1-2: reference number (such as 7078)
Bytes 3-4: the number of registers to be read (e.g. 1).

The server receives the request and executes the operation defined by the operation code, i.e. reads the register to which the received reference number points to. The server forms a reply sent to the client. The operation code of the PDU reply indicates the operation code of the request, i.e. number three. The data field contains two bytes/register, which in this example is 2 bytes containing the 16 bits of figure 3. In case an error has occurred in a data point or the operation, an error message is sent as a reply. In the error message reply the operation code field contains an error operation code and a field exception code describing the error.

The client checks on the basis of the received register data whether the data have changed in relation to a previously received register data. This enables checking for new alarms. In case there are no new alarms, the client apparatus does not take any further actions, but performs a new operation code 3 request after a certain interval. In case there are new alarms, the client apparatus sends another request containing a certain second operation code and the same reference number as the operation code 3 request. In this illustration the second operation code is 101, but it can also be another operation code specified to execute the same operation. Operation code 101 and the same reference number are used for transmitting the time stamps from the server to the client. The second request is, e.g.:
Byte 0: operation code = 65 (hex)
Byte 1-2: reference number (such as 7078)
Byte 3: bit number (e.g. 255, i.e. all time stamps of the reply)
Byte 4: error log = 1 (always 1)
Byte 5: not used, always zero.

The server processes this request in the same way as the operation code 3 request. The reply is also formed similarly. As each operation code defines its own operation, the operation code 101 defines that the reply to be formed contains 6 bytes for indicating the time stamp of each alarm event. A single time stamp is thereby 48 bits. The reply can, for example, be:
Byte 0: operation code = 65 (hexadecimal number corresponding to number 101)
Byte 1: the number of the following bytes of the reply
Bytes 2-7: time stamp for bit 0 of the first reply
Bytes 8-13:1 time stamp for bit 1 of the first reply
Bytes 14-19: 2 time stamp for bit 2 of the first reply
Bytes 20-25: time stamp for bit 3 of the first reply
Bytes 26-31: time stamp for bit 4 of the first reply
Bytes 32-37: time stamp for bit 5 of the first reply
Bytes 38-43: time stamp for bit 6 of the first reply
Bytes 44-49: time stamp for bit 7 of the first reply
Bytes 50-55: time stamp for bit 8 of the first reply
Bytes 56-61: time stamp for bit 9 of the first reply
Bytes 62-67: time stamp for bit 10 of the first reply
Bytes 68-73: time stamp for bit 11 of the first reply
Bytes 74-79: time stamp for bit 12 of the first reply
Bytes 80-85: time stamp for bit 13 of the first reply
Bytes 86-91: time stamp for bit 14 of the first reply
Bytes 92-97: time stamp for bit 15 of the first reply
Bytes 98-99: not used, always zero.

Each time stamp is usually marked so that the most significant byte MSB is the first one and the least significant byte LSB is the last one, for example byte 80 = MSB, byte 85 = LSB. In case an error has occurred in a data point or the operation, an error message is sent as a reply.
Byte 0: error code = E5 (hex)
Byte 1: exception code = 01 or 02.

Figure 3 shows the time stamps for bits 0, 2 and 5 as reply 32. The time stamps of these bits can in hexadecimal numbers be, for example
010F51CD8F73: time stamp for bit 0 -> 05/12/2006 8:49:23,315 (SF, TE701)
010F51CEA47A: time stamp for bit 2 → 05/12/2006 8:50:34,234 (ALM, TE701)
010F51CEA779: time stamp for bit 5 → 05/12/2006 8:50:35,001 (SHD, TE701)

There is no time stamp for other bits, so their values are marked as zero in the reply. The request does not, however, have to ask for all time stamps, but only some time stamps, such as
Byte 0: FC = 65 (hex)
Byte 1-2: reference number (such as 7078)
Byte 3: bit number (e.g. 2, i.e. request for the time stamp the third bit)
Byte 4: error log = 1 (always 1)
Byte 5: not used, always zero.
whereby the reply is e.g.
Byte 0: FC = 65 (hex)
Byte 1: number of bytes in the reply, 08
Bytes 2-7: 48 bit time stamp for bit 2 010F51CEA47A → 05/12/2006 8:50:34,234 (ALM, TE701)
Byte 8-9: not used, always zero.

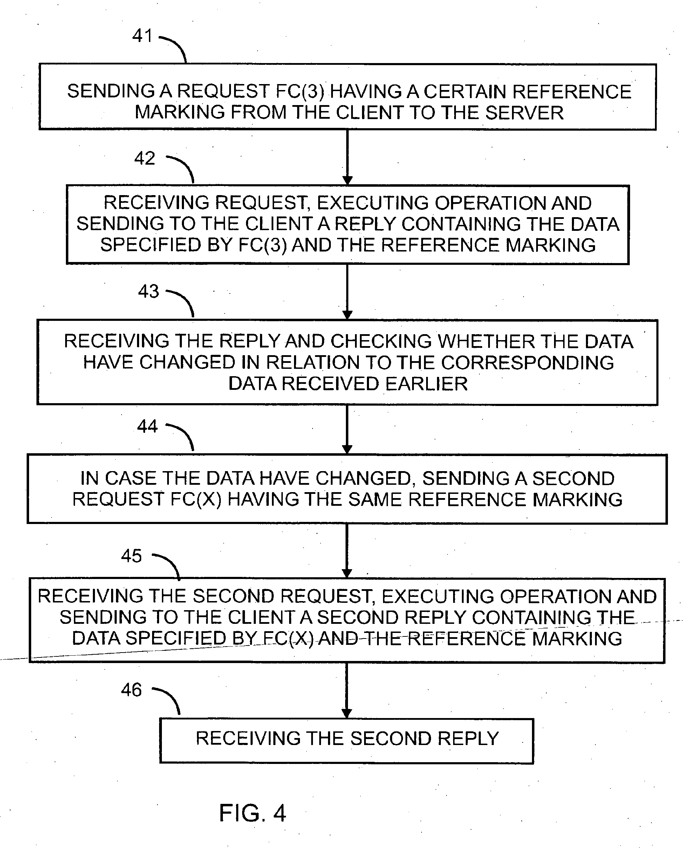

Figure 4 illustrates a method according to the invention, the method comprising steps for sending a first reply and a second reply from the server to the client. first, the client 41 sends to the server a request according to operation code 3 containing a certain reference marking- The request is received 42 at the server, where the operation contained by the request is executed, as a response to which a reply message is formed. A reply containing operation code 3 and the data specified by the reference marking is sent from the server to the client. The client receives 43 the reply and it is checked to see whether the information of the reply are changed in relation to the data received earlier, In case the data have changed, the client sends 44 to the server a second request containing a certain second operation code (in this disclosure operation code 101) having the same reference marking. The server receives 45 the second request, executes the operation of the second request and sends a second reply to the client, containing a second operation code and the data specified by the reference marking. The client receives the second reply.

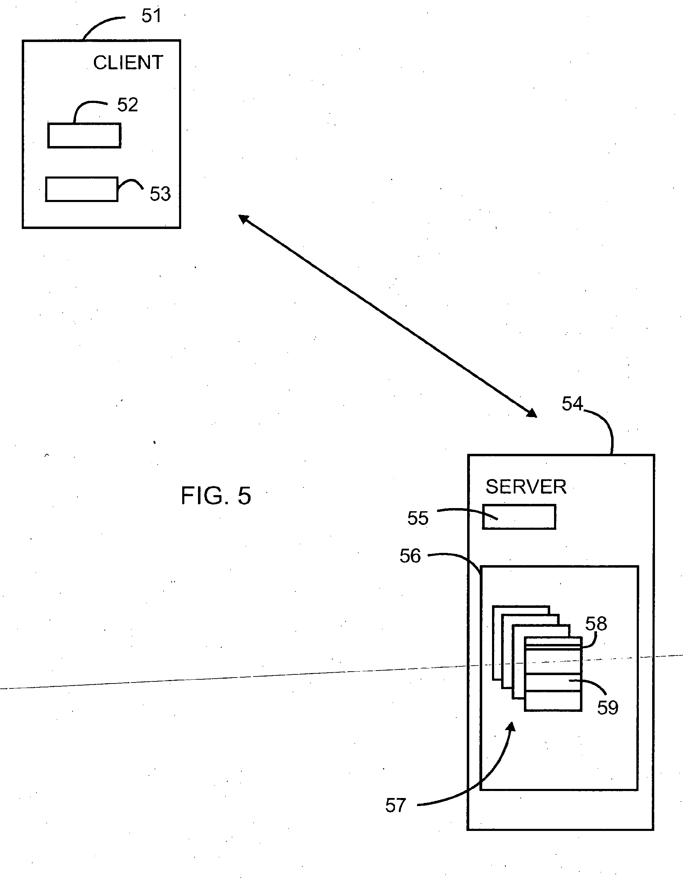

Figure 5 illustrates an arrangement according to the invention. The arrangement comprises a client apparatus 51 comprising communication means 52 for forming requests and receiving replies according to the Modbus protocol. The communication means are arranged to form a request according to operation code 3 having a certain reference marking for commencing receiving alarm data from the server apparatus. The client apparatus 51 also comprises checking means 53 for checking whether the received data of operation code 3 and the reference marking have changed in relation to the data received earlier. The communication means are also arranged for sending from the client 51 to the server 54 a second request according to a second operation code having the same reference marking in case the data are considered changed on the basis of the check performed by the checking means.

The arrangement can also comprise server means 54 comprising first means 55 for receiving requests and for sending replies according to the Modbus protocol and other means 56 for executing the operations of the requests. The other means comprise primary tables 57 comprising Modbus registers. A certain register 58 of a certain primary table is arranged to represent a 16 bit line indicating alarm events, to which register the operation code 3 and a certain reference marking point to. The second register part 59 of the primary table is arranged to represent a data of 16*48 bits of which each 16 bits represents the time stamp of a certain alarm event. A certain second operation code and the same reference marking point to the second register part.

The realization according to the invention is simple and easy to carry out. As the time stamp is transmitted by another message, the size of the second message is easier to specify so as to be suitable. A 48 bit time stamp will be sufficient for thousands of years and it can be used to achieve an accuracy of millisecond level, A time stamp of another size could naturally also be used, such as a 56 bit time stamp, whereby a considerably higher accuracy could be achieved. The operation of the invention can also be changed so that the time stamps are always requested when there is an alarm event in the server, i.e. always when the value of any bit of the first reply is one.

In the light of the above description and its examples it is obvious that the embodiment according to the invention can be realized in a number of ways. It is obvious that the invention is not limited to the examples mentioned here, but that the invention can be realized by a number of different embodiments.

Thus, any inventive embodiment can be carried out within the scope of the invention.

## Claims

1. A method of transmitting alarm data from the server to the client via Modbus data communication, the method comprising the following steps:
- sending from the client to the server a request according to operation code 3 containing a certain reference marking (41),
- receiving the request at the server and executing the operation of the request and sending to the client a reply containing operation code 3 and the data specified in the reference marking (42), said method **characterized in that**:
- receiving the reply at the client and checking whether the information of the reply are changed in relation to the data received earlier (43),
- in case the data have changed, sending from the client to the server a second request containing a certain second operation code having the same reference marking (44),
- receiving the second request at the server and executing the operation of the second request and sending to the client a second reply containing the data specified in a second operation code and the reference marking (45), and
- receiving the second reply at the client (46).

2. A method according to claim 1, **characterized in that** the first data received by the client comprises 16 bits (31) of which each bit indicates a certain alarm event and the second message received by the client comprises 16*48 bits (32) of which each 48 bits indicates a time stamp for the corresponding alarm event of the first message.

3. A method according to claim 2, **characterized in that** the second operation code is 101.

4. An arrangement comprising a client apparatus (51) arranged to use Modbus data communication for requesting data from a server apparatus, the client apparatus comprising communications means (52) for forming requests and receiving replies according to the Modbus protocol, wherein the communication means (52) are provided to form a request according to operation code 3 having a certain reference marking for commencing reception of alarm data from the server apparatus, the client apparatus (51) **characterized by** additionally comprising checking means (53) for checking whether the received data according to operation code 3 and the reference marking have changed in relation to the previously received corresponding data,
the communication means (52) being also arranged for sending a second request according to a second operation code having the same reference marking from the client to the server in case the data are found to have changed on the basis of the check performed by the checking means (53).

5. An arrangement according to claim 4, comprising a server apparatus (54) arranged to use Modbus data communication for sending data to a client apparatus (51), the apparatus comprising first means (55) for receiving requests and sending replies according to Modbus protocol and a second means (56) for executing the operations of the requests, the second means comprising primary tables (57) comprising Modbus registers, **characterized in that** a certain register (58) of a certain primary table is arranged to represent a 16 bit line indicating alarm events and into which register the operation code 3 and the certain reference marking point to, the second register part (59) of the same primary table being arranged to represent a 16*48 bit data, of which each 48 bits corresponds to a time stamp of a certain alarm event while the second operation code and the same reference marking point to the second register part (59).

## Patentansprüche

1. Verfahren zum Senden von Alarmdaten vom Server über Modbus-Datenkommunikation an den Client, wobei das Verfahren die folgenden Schritte umfasst:
- Senden vom Client an den Server einer Anforderung gemäß Operationscode 3, die eine bestimmte Bezugsmarkierung enthält (41),
- Empfangen der Anforderung am Server und Ausführen der Operation der Anforderung und Senden einer Antwort an den Server, die den Operationscode 3 und die Daten enthält, die in der Bezugsmarkierung spezifiziert sind (42), wobei das Verfahren **gekennzeichnet ist durch**:
- Empfangen der Antwort am Client und Prüfen, ob sich die Informationen der Antwort in Bezug auf die früher empfangenen Daten geändert haben (43),
- Senden, falls sich die Daten geändert haben, vom Client einer zweiten Anforderung an den Server, die einen bestimmten zweiten Operationscode mit der gleichen Bezugsmarkierung enthält (44),
- Empfangen der zweiten Anforderung am Server und Ausführen der Operation der zweiten Anforderung und Senden einer zweiten Antwort an den Client, welche die Daten enthält, die in einem zweiten Operationscode und der Bezugsmarkierung spezifiziert sind (45), und
- Empfangen der zweiten Antwort am Client (46).

2. Verfahren nach Anspruch 1, **dadurch gekennzeichnet, dass** die ersten, durch den Client empfangenen Daten 16 Bit (31) umfassen, von welchen jedes Bit ein bestimmtes Alarmereignis anzeigt, und die zweite, durch den Client empfangene Nachricht 16 * 48 Bit (32) umfasst, von welchen jedes 48. Bit einen Zeitstempel für das entsprechende Alarmereignis der ersten Nachricht anzeigt.

3. Verfahren nach Anspruch 2, **dadurch gekennzeichnet, dass** der zweite Operationscode 101 ist.

4. Anordnung, umfassend eine Client-Vorrichtung (51), die so ausgelegt ist, dass sie Modbus-Datenkommunikation zum Anfordern von Daten von einer Server-Vorrichtung verwendet, wobei die Client-Vorrichtung Kommunikationsmittel (52) zum Bilden von Anforderungen und Empfangen von Antworten gemäß dem Modbus-Protokoll umfasst, wobei die Kommunikationsmittel (52) zum Bilden einer Anforderung gemäß Operationscode 3 mit einer bestimmten Bezugsmarkierung zum Starten des Empfangs von Alarmdaten von der Server-Vorrichtung vorgesehen sind, wobei die Client-Vorrichtung (51) **dadurch gekennzeichnet ist, dass** sie außerdem Prüfmittel (53) zum Prüfen umfasst, ob sich die empfangenen Daten gemäß Operationscode 3 und der Bezugsmarkierung in Bezug auf die vorher empfangenen, entsprechenden Daten geändert haben,
wobei die Kommunikationsmittel (52) außerdem zum Senden einer zweiten Anforderung gemäß einem zweiten Operationscode mit der gleichen Bezugsmarkierung vom Client an den Server ausgelegt sind, falls auf der Basis der durch die Prüfmittel (53) durchgeführten Prüfung festgestellt wird, dass sich die Daten geändert haben.

5. Anordnung nach Anspruch 4, umfassend eine Server-Vorrichtung (54), die so ausgelegt ist, dass sie Modbus-Datenkommunikation zum Senden von Daten an eine Client-Vorrichtung (51) verwendet, wobei die Vorrichtung erste Mittel (55) zum Empfangen von Anforderungen und Senden von Antworten gemäß dem Modbus-Protokoll und ein zweites Mittel (56) zum Ausführen der Operationen der Anforderungen umfasst, wobei das zweite Mittel Primärtabellen (57) umfasst, die Modbus-Register umfassen, **dadurch gekennzeichnet, dass** ein bestimmtes Register (58) einer bestimmten Primärtabelle so ausgelegt ist, dass es eine 16-Bit-Zeile darstellt, die Alarmereignisse anzeigt, und in welches Register der Operationscode 3 und die bestimmte Bezugsmarkierung zeigen, wobei der zweite Registerteil (59) der gleichen Primärtabelle so ausgelegt ist, dass er 16 * 48-Bit-Daten darstellt, von welchen jedes 48. Bit einem Zeitstempel eines bestimmten Alarmereignisses entspricht, während der zweite Operationscode und die gleiche Bezugsmarkierung auf den zweiten Registerteil (59) zeigen.

## Revendications

1. Procédé de transmission de données d'alarme du serveur au client par l'intermédiaire d'une communication de données Modbus, le procédé comprenant les étapes suivantes :
- l'envoi, du client au serveur, d'une demande selon un code d'opération 3 contenant un certain marquage de référence (41),
- la réception de la demande au niveau du serveur, l'exécution de l'opération de la demande et l'envoi, au client, d'une réponse contenant le code d'opération 3 et les données spécifiées dans le marquage de référence (42), ledit procédé étant **caractérisé en ce qu'**il comprend en outre :
- la réception de la réponse au niveau du client et la vérification si les informations de la réponse ont changé par rapport aux données précédemment reçues (43),
- dans le cas où les données ont changé, l'envoi, du client au serveur, d'une deuxième demande contenant un certain deuxième code d'opération ayant le même marquage de référence (44),
- la réception de la deuxième demande au niveau du serveur, l'exécution de l'opération de la deuxième demande et l'envoi, au client, d'une deuxième réponse contenant les données spécifiées dans un deuxième code d'opération et le marquage de référence (45), et
- la réception de la deuxième réponse au niveau du client (46).

2. Procédé selon la revendication 1, **caractérisé en ce que** les premières données reçues par le client comprennent 16 bits (31), chaque bit indiquant un certain événement d'alarme, et le deuxième message reçu par le client comprend 16*48 bits (32), chaque groupe de 48 bits indiquant un horodatage pour l'événement d'alarme correspondant du premier message.

3. Procédé selon la revendication 2, **caractérisé en ce que** le deuxième code d'opération est 101.

4. Agencement comprenant un appareil client (51) agencé pour utiliser une communication de données Modbus pour demander des données à un appareil serveur, l'appareil client comprenant un moyen de communication (52) pour constituer des demandes et recevoir des réponses selon le protocole Modbus, dans lequel le moyen de communication (52) est fourni pour constituer une demande selon un code d'opération 3 ayant un certain marquage de référence pour commencer une réception de données d'alarme en provenance de l'appareil serveur, l'appareil client (51) étant **caractérisé en ce qu'**il comprend en outre un moyen de vérification (53) pour vérifier si les données reçues selon le code d'opération 3 et le marquage de référence ont changé par rapport aux données correspondantes précédemment reçues,
le moyen de communication (52) étant également agencé pour envoyer une deuxième demande selon un deuxième code d'opération ayant le même marquage de référence, du client au serveur, dans le cas où les données ont changé sur la base de la vérification effectuée par le moyen de vérification (53).

5. Agencement selon la revendication 4, comprenant un appareil serveur (54) agencé pour utiliser une communication de données Modbus pour envoyer des données à un appareil client (51), l'appareil comprenant un premier moyen (55) pour recevoir des demandes et envoyer des réponses selon le protocole Modbus et un deuxième moyen (56) pour exécuter les opérations des demandes, le deuxième moyen comprenant des tableaux primaires (57) comprenant des registres Modbus, **caractérisé en ce qu'**un certain registre (58) d'un certain tableau primaire est agencé pour représenter une ligne de 16 bits indiquant des événements d'alarme, le code d'opération 3 et le marquage de référence pointant vers le registre, la deuxième partie de registre (59) du même tableau primaire étant agencée pour représenter des données de 16*48 bits, chaque groupe de 48 bits correspondant à un horodatage d'un certain événement d'alarme, et le deuxième code d'opération et le même marquage de référence pointant vers la deuxième partie de registre (59).
